# FASCICULE DE BREVET EUROPEEN

(11) **EP 0 783 912 B1**
(45) Date de publication et mention de la délivrance du brevet: **27.11.2002**
(21) Numéro de dépôt: 97420005.7
(22) Date de dépôt: 09.01.1997
(51) Int. Cl.: B01D 29/68

(54) **Dispositif de filtration autodecolmatant**
Selbstreinigende Filtrationsvorrichtung
Self-cleaning filtration device

(30) Priorité: 15.01.1996 FR 9600558
(43) Date de publication de la demande: 16.07.1997
(73) Titulaire: ABB Cellier SA, 73100 Aix les Bains (FR)
(72) Inventeur: Mosca, Pierre, 38500 Coublevie (FR)
(74) Mandataire: Vuillermoz, Bruno

(56) Documents cités:
- EP-A- 0 312 354
- CH-A- 525 019
- GB-A- 1 384 414
- GB-A- 1 448 577

## Description

### Domaine technique

L'invention se rattache au domaine technique de la filtration, et plus particulièrement à celui de la filtration de suspensions, plus particulièrement de liquides à haute concentration et à forte viscosité. Elle trouve son application dans diverses industries telles que la chimie, la pharmacie, l'industrie papetière, des peintures et vernis, et même des activités de récupération par dépollution.

### Techniques antérieures

Pour assurer la filtration de suspensions, c'est-à-dire de solutions à haute concentration on connaît plusieurs dispositifs.

Dans une forme de réalisation largement commercialisée, une unité de filtration comprend une enceinte à l'intérieur de laquelle est disposée une cartouche filtrante présentant une porosité calibrée. Le liquide à traiter est introduit dans l'enceinte à l'intérieur de la cartouche filtrante et, lorsqu'il est sous pression, le liquide traverse la paroi poreuse de la cartouche pour se retrouver dans la zone périphérique de l'enceinte de laquelle il est expulsé. Le sens de circulation de la suspension peut être indifféremment opposé et dans ce cas, le liquide traverse la cartouche de l'extérieur vers l'intérieur.

Bien entendu, le passage de la suspension à travers le média filtrant provoque le dépôt des particules les plus importantes, voire des agglomérats, sur la face interne (ou externe) de la cartouche. Ce colmatage intervient d'autant plus rapidement que la suspension contient une quantité élevée de contaminants ou de particules de taille importante. Il s'avère donc indispensable d'arrêter l'exploitation de manière régulière pour procéder à un nettoyage de la cartouche, ce qui se traduit par les opérations longues et une perte de temps correspondant à ce nettoyage.

Pour pallier à cet inconvénient, on a proposé d'équiper la cartouche filtrante d'un dispositif rotatif comportant des racles portés par des bras radiaux qui parcourent la périphérie interne (ou externe) de la cartouche. Ainsi, lorsque de la matière s'est agglomérée sur la cartouche, les racles, par leur frottement contre la paroi de la cartouche, provoquent le décollement des amas de contaminants, et ainsi rétablissent le libre passage de la suspension à traiter.

Cette solution, bien que largement répandue et exploitée avec succès notamment par le Demandeur sous la marque FILTERCEL®, présente l'inconvénient majeur de ne pas éliminer définitivement les particules agglomérées. Au contraire celles-ci s'accumulent par gravité au fond de la cartouche ou de l'enceinte. De la sorte, pour éliminer ces déchets, il est nécessaire d'arrêter l'installation pour purger la cartouche. Malheureusement, cette opération se traduit par une perte de la suspension non encore filtrée présente dans la cartouche. Cette opération augmente donc le coût de la filtration pour des suspensions à traiter contenant des produits de forte valeur, tels que notamment les charges nécessaires au couchage du papier. En outre, elle se traduit par un accroissement de la quantité d'effluents.

Par ailleurs, pour assurer une filtration en continu, et compte-tenu des opérations de nettoyage précitées, il est nécessaire de disposer de deux filtres montés en parallèle dont l'un reste en fonctionnement pendant que l'autre subit un décolmatage. Il va s'en dire que cette solution n'est pas économiquement satisfaisante.

On a également proposé dans le document CH-A-525019, correspondant au brevet américain US 3 574 509, d'équiper une installation de filtration similaire d'une caisse aspirante disposée à l'intérieur de la cartouche filtrante. Une telle caisse aspirante est montée sur un équipage rotatif de telle façon qu'elle puisse parcourir le contour intérieur de la cartouche. Le decolmatage des impuretés collées sur la cartouche est réalisé par aspiration à contre-courant. Malheureusement, lorsque les impuretés sont solidement incrustées sur la cartouche, l'aspiration est inopérante. En outre, ces impuretés provoquent par la suite l'agglomération d'impuretés supplémentaires et l'encrassement devient irrémédiable. L'augmentation de la pression d'aspiration est généralement inopérante. Dans le cas où elle permet un décollement, c'est au prix d'une grande consommation de la solution déjà filtrée, ce qui pénalise la rentabilité d'une telle opération.

Un des problèmes que se propose de résoudre l'invention est celui de la filtration en continu d'une suspension, compatible avec le maintien de la cartouche filtrante dans un état de propreté optimum.

Un autre problème que cherche à résoudre l'invention est celui de l'agglomération successive des impuretés sur des foyers fortement incrustés.

Un troisième problème posé est celui de la consommation excessive de solution déjà filtrée lors d'un lavage à contre-courant.

### Exposé de l'invention

L'invention concerne donc un dispositif de filtration de suspensions, du type comportant
- une enceinte de forme générale cylindrique comportant deux ouvertures respectivement d'entrée et de sortie, de la suspension à filtrer ;
- une cartouche filtrante cylindrique d'axe longitudinal XX', disposée à l'intérieur de l'enceinte et présentant une porosité calibrée entre sa première et sa deuxième faces, ordonnées selon le sens de circulation de la suspension à filtrer;
la suspension à filtrer circulant de l'ouverture d'entrée vers la cartouche, puis traversant la paroi de la cartouche de sa première vers sa deuxième face, puis étant évacuée par l'ouverture de sortie.
- au moins une caisse aspirante tangente à la cartouche, l'ouverture de la caisse aspirante se trouvant en regard d'une génératrice de la première face de la cartouche , ladite caisse aspirante étant entraînée en rotation par rapport à l'axe longitudinal de la cartouche.

Ce dispositif se caractérise en ce que la caisse aspirante comporte sur un bord de son ouverture un racle de décolmatage venant au contact de la première face de la cartouche.

En d'autres termes, la surface du média filtrant située du coté de la suspension non filtrée est raclée, et les impuretés décollées sont aspirées à contre-courant, une certaine partie de la suspension filtrée retraversant la cartouche pour entraîner les contaminants vers la caisse aspirante.

Bien évidemment, la position de la caisse aspirante caractéristique est fonction du sens de filtration de la suspension.

Autrement dit, lorsque la suspension circule de l'intérieur vers l'extérieur de la cartouche, la surface interne de celle-ci est parcourue par une lame qui décolle et permet l'aspiration des impuretés agglomérées sur la face interne de la cartouche.

Dans le cas d'une filtration dans le sens opposé, c'est-à-dire de l'extérieur vers l'intérieur de la cartouche, la caisse aspirante est située contre la périphérie externe de celle-ci.

Ainsi, pour une filtration centrifuge, les grosses particules agglomérées sur la face interne (ou externe, dans le cas d'une filtration centripète) de la cartouche sont positivement décollées et sont immédiatement aspirées.

Avantageusement en pratique, la lame formant racle est orientée dans le sens de rotation de la caisse aspirante. De la sorte, le décollage des impuretés se produit en amont de leur aspiration par l'ouverture de la caisse aspirante proprement dite. Les impuretés sont donc accompagnées par la lame caractéristique jusqu'à l'ouverture de la caisse aspirante avant leur aspiration.

Pour résoudre le problème de l'économie de la solution à filtrer, la caisse aspirante comporte sur le bord opposé au racle, un déflecteur légèrement écarté de la première face de la cartouche pour ménager un volume de très faible épaisseur pour le passage calibré de la suspension et son écoulement laminaire pour entraîner les impuretés décollées.

Autrement dit, les bords de l'ouverture de la caisse aspirante présentent d'un côté, un racle tangent formant lèvre permettant le décollage des impuretés et de l'autre côté une tôle limitant l'entrée de suspension non filtrée à l'intérieur de la caisse aspirante. En d'autres termes, les bords de l'ouverture de la caisse aspirante sont prévus pour que le liquide aspiré servant au décolmatage provienne en extrême majorité de la zone filtrée, et ainsi traverse la cartouche pour décoller à contre-courant puis entraîner les impuretés colmatantes.

Le jeu correspondant à la lame de fluide, ménagé entre le déflecteur et la paroi de la cartouche doit être suffisant pour éviter que ce déflecteur ne serve de racle et ne décolle les impuretés avant qu'elles ne puissent être aspirées. Par ailleurs, la longueur de ce déflecteur, déterminant la longueur du jeu, compté dans le sens du déplacement de la caisse aspirante, doit être suffisant pour générer des pertes de charge réduisant au minimum le débit de suspensions non filtrées.

Avantageusement, le déflecteur présente au voisinage de l'ouverture de la caisse aspirante, une portion chanfreinée parallèlement à la lame. De la sorte, la lame caractéristique et le déflecteur forment un canal de faible épaisseur dans lequel sont entraînées les impuretés.

Avantageusement en pratique, pour assurer un décolmatage efficace, le dispositif comporte un moyen destiné à plaquer le racle de la caisse aspirante contre la première face de la cartouche. Ainsi, on assure une pression suffisante pour assurer un raclage efficace.

En pratique, la caisse aspirante est reliée à des moyens d'aspiration. Toutefois, dans le cas d'une filtration d'un fluide sous pression, il peut être avantageux de relier directement la caisse aspirante à l'atmosphère pour limiter le matériel nécessaire.

Dans une version plus sophistiquée de l'invention, la caisse aspirante comporte un cylindre rotatif intérieurement tangent formant barillet, présentant des lumières allongées et réparties selon des génératrices différentes.

Autrement dit, la caisse aspirante comporte un organe supplémentaire destiné à localiser l'aspiration de manière séquentielle uniquement sur certaines zones de l'ouverture de la caisse aspirante.

De cette manière, l'aspiration est plus importante et le décolmatage plus efficace. La position des lumières est règlable de telle manière que les zones d'aspiration supérieures se déplacent pour couvrir la totalité de la surface interne de la cartouche. Par ailleurs, la réduction de la surface d'aspiration aux seules lumières en regard avec l'ouverture de la caisse aspirante permet de diminuer notablement le flux d'aspiration et donc la puissance des organes de mise sous dépression, ainsi que la consommation et le retraitement de suspension déjà filtrée.

Avantageusement, le dispositif comprend des cames assurant la rotation du barillet à l'intérieur de la caisse aspirante au fur et à mesure de la révolution de la caisse aspirante dans la cartouche.

Autrement dit, le passage d'une zone d'aspiration à l'autre se fait séquentiellement et de manière mécanique sans nécessiter d'interventions supplémentaires.

Dans une autre forme de réalisation, le dispositif comporte une pluralité de caisses aspirantes angulairement décalées les unes par rapport aux autres autour de l'axe XX' de la cartouche, et dont les ouvertures se situent chacune à des niveaux différents de la hauteur de la cartouche.

Autrement dit, plusieurs caisses aspirantes sont disposées à l'intérieur (ou à l'extérieur) de la cartouche et assurent chacune le décolmatage d'une section de la hauteur de la cartouche. Le fonctionnement décalé de chacune de ces caisses aspirantes permet avantageusement d'obtenir une diminution de la consommation à contre-courant de suspension déjà filtrée.

### Description sommaire des dessins

La manière de réaliser l'invention, ainsi que les avantages qui en découlent ressortiront bien de la description des modes de réalisation qui suivent à l'appui des figures annexées dans lesquelles :
La figure 1 est une vue de côté d'un dispositif de filtration dans lequel l'enceinte est ouverte et la cartouche extraite supérieurement.
La figure 2 est une vue de côté d'un dispositif conforme à l'invention.
La figure 3 est une coupe selon les flèches III - III' de la figure 2.
La figure 4 est une vue de détail, extraite de la figure 3 de la zone d'aspiration.
Les figures 5 et 6 sont des schémas explicatifs de la circulation des différents liquides, respectivement lors du décolmatage et du lavage du filtre.
La figure 7 est une vue en perspective sommaire du barillet installé dans une caisse aspirante dans une variante de l'invention, montré en position extraite.

### Manière de réaliser l'invention

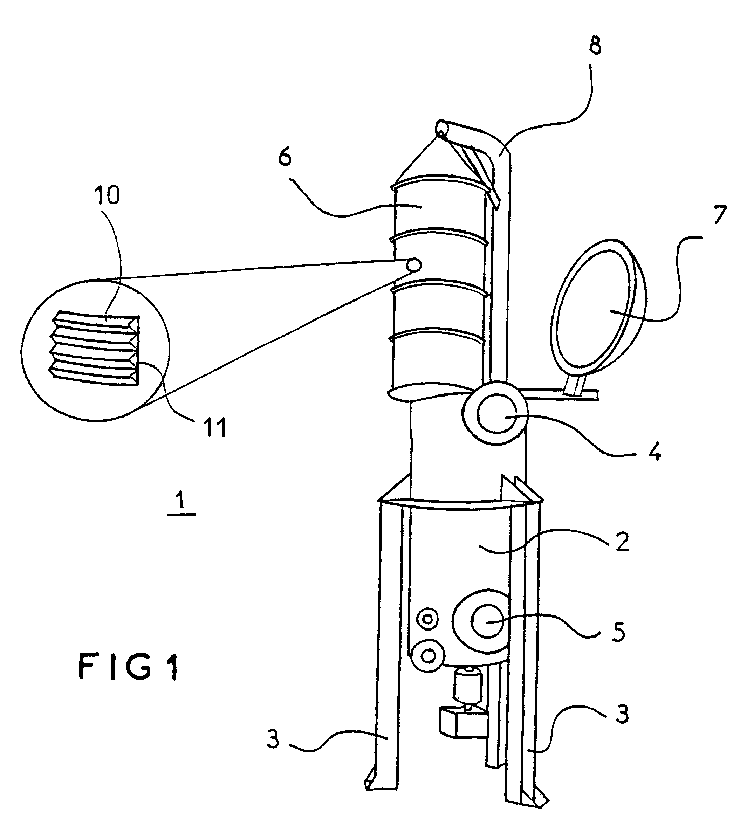

De façon générale, l'invention s'applique à un dispositif de filtrage tel qu'illustré à la figure 1. Ainsi, ce dispositif (1) comporte une enceinte (2) cylindrique surélevée par un montage sur trois pieds (3). Cette enceinte (2) comprend, vers le haut une ouverture d'amenée (4) de la suspension à filtrer, et vers le bas une ouverture de sortie (5) de la suspension traitée. A l'intérieur de l'enceinte (2) se trouve une cartouche filtrante (6) extractible après ouverture du couvercle supérieur (7) et dont la manutention est facilitée par une potence (8) attenante à l'enceinte.

Comme déjà dit, la filtration peut s'effectuer indifféremment de l'intérieur vers l'extérieur du média filtrant ou en sens inverse. Dans la suite de la description, le sens de circulation de la suspension est choisi de l'intérieur vers l'extérieur de la cartouche.

Concernant la cartouche (6), celle-ci est également de forme cylindrique et réalisée de manière connue, de façon à présenter une porosité satisfaisante. Dans l'application illustrée, le filtre est réalisé par l'enroulement d'un fil métallique (10) de section triangulaire. Selon une génératrice du cylindre formant la cartouche, les côtés parallèles (11) des fils sont situés du côté interne de la cartouche (6).

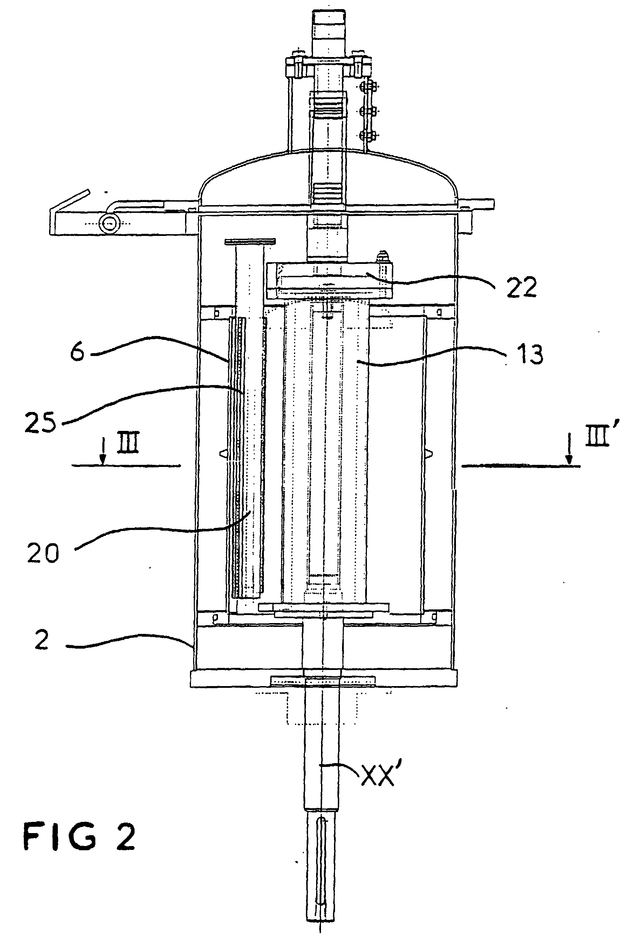

Conformément à l'invention, le filtre est équipé d'un dispositif de décolmatage par aspiration. Ce dispositif se constitue principalement d'une caisse aspirante (20), de forme cylindrique ou autre, dont l'ouverture (21) se trouve en regard d'une génératrice de la cartouche filtrante (6) (voir figure 2). Bien entendu, l'invention couvre également les dispositifs comprenant plusieurs caisses aspirantes réparties à l'intérieur (ou autour) de la cartouche filtrante, commandées de manière indépendantes ou non.

Par ailleurs, la caisse aspirante est associée à des moyens (22) de mise en rotation de la caisse aspirante (20) pour lui permettre de parcourir toute la périphérie interne de la cartouche (6). La caisse aspirante (20), et plus précisément son ouverture (21) a une longueur au moins égale à la hauteur de la cartouche.

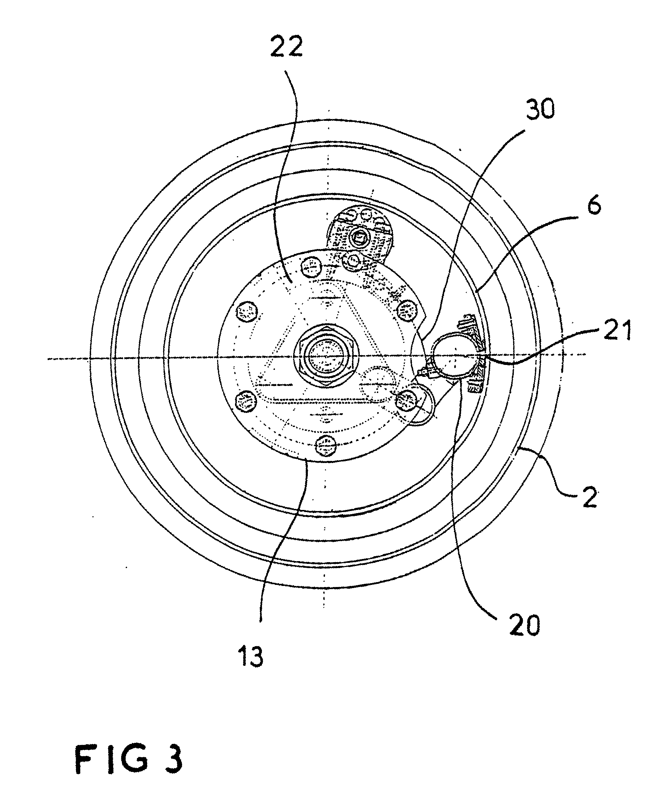

En pratique, la caisse aspirante (6) est associée à un collecteur (23) permettant d'évacuer les impuretés filtrées et récupérées (voir figure 3).

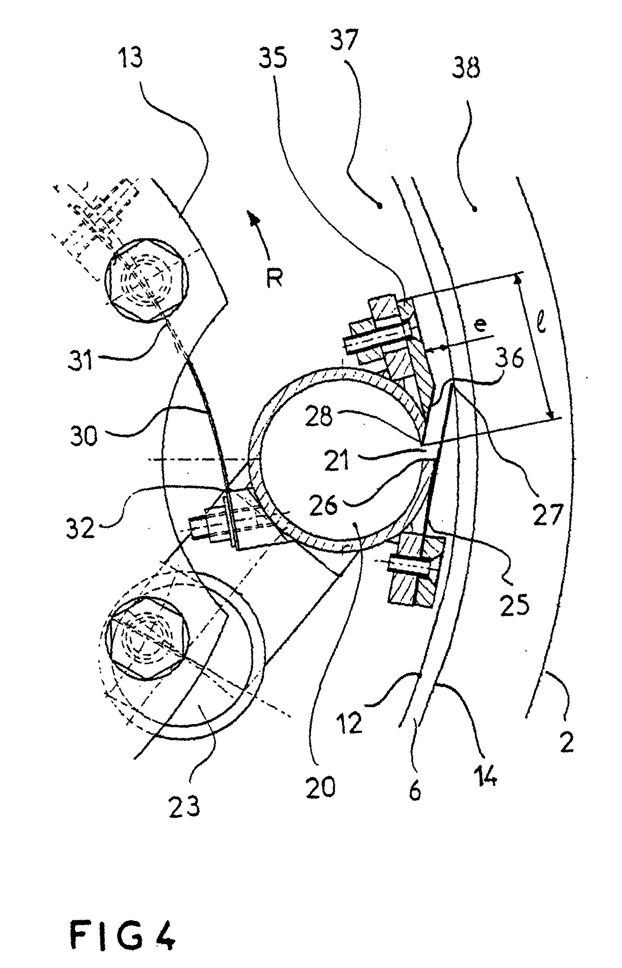

Pour permettre un décolmatage efficace (voir figure 4), la caisse aspirante (6) est associée à un racle (25). Ce racle (25) est constitué par une tôle longitudinale en matériau dur, tel que céramique ou métal traité et solidaire d'un bord (26) de l'ouverture (21) de la caisse aspirante. Plus précisément, il s'agit du bord (26) situé en arrière de l'ouverture (21) de la caisse aspirante (20) par rapport au sens R de révolution de ladite caisse.

Il importe que le racle (25) présente une arête (27) en permanence au contact de la périphérie interne (12) de la cartouche (6). C'est pourquoi la géométrie, et surtout l'angle d'incidence de cette arête (27) sont prépondérants. Ainsi, comme on le voit à la figure 4, la lame (25) est orientée en direction du sens de rotation de la caisse aspirante, de telle manière que d'une part son arête (27) vienne au contact de la cartouche (6) en amont de la zone d'aspiration constituée par l'ouverture (21), et que d'autre part, la lame (25) soit aussi peu inclinée que possible par rapport à la périphérie interne (12) de la cartouche. Le décollement des impuretés est donc réalisé de façon optimale.

Autrement dit, l'ouverture (21) de la caisse aspirante (20) parcourt la surface interne (12) de la cartouche (6) légèrement après le racle (25), ce qui permet l'aspiration des impuretés après leur décollement et leur entraînement par le racle (25) incliné.

Pour permettre un bon placage de ce racle (25) contre la surface interne de la cartouche (6), la caisse aspirante (20) est associée à des moyens élastiques (30) permettant de plaquer la caisse aspirante (20), et surtout le racle (25) contre la périphérie interne (12) de la cartouche (6).

Dans la figure 3, on observe que l'intérieur de la cartouche (6) est équipé d'un volume creux cylindrique (13) dont la fonction est de limiter le volume de suspension présent dans la cartouche, et plus précisément d'augmenter le rapport surface filtrante/volume de suspension.

Ainsi, dans la forme illustrée en figure 4, les moyens de placage de la caisse aspirante sont constitués par un feuillard élastique (30) cintré, dont une extrémité (31) est reliée au volume creux (13) et l'autre (32) à une partie de la caisse aspirante (20). Bien entendu, l'invention recouvre également toutes les variantes dans lesquelles ce feuillard (30) serait remplacé par des moyens élastiques équivalents.

Par ailleurs, le bord (28) de l'ouverture (21) de la caisse aspirante (20) opposé au racle (25) comporte une plaque (35) longitudinale formant déflecteur. Deux paramètres dimensionnels de cette plaque (35) sont particulièrement importants pour un fonctionnement optimal de la caisse aspirante (20).

Ainsi, le jeu (e) situé entre la face externe (36) de cette plaque (35) et la périphérie interne (12) de la cartouche (6), doit être suffisant pour que cette plaque (35) ne joue pas le rôle de racle et ne décroche les impuretés avant le passage du racle (25), en provoquant ainsi la chute de ces déchets à l'intérieur de la cartouche filtrante (6), ce qui, comme déjà dit, constitue un des inconvénients que cherche à éviter l'invention. Inversement, ce jeu (e) ne doit pas être trop important pour éviter que trop de suspension à filtrer soit aspirée par la caisse caractéristique (20).

Complémentairement, la longueur (l) de la plaque (35), comptée dans le sens de déplacement de la caisse aspirante (20), détermine en combinaison avec le jeu (e), la valeur des pertes de charge entre l'intérieur (37) de la cartouche et la caisse aspirante (20). Ainsi, l'augmentation de cette longueur (l) accroît les pertes de charge et diminue l'aspiration parasite de suspension non filtrée.

Bien entendu, ces différents paramètres (e,l) sont réglables en fonction du type de suspension à traiter et notamment de sa rhéologie.

Avantageusement, comme illustré en figure 4, ce déflecteur est chanfreiné (36) de telle sorte que le canal formé avec le racle (25) ait une épaisseur constante.

Le collecteur (23) associé à la caisse aspirante (20) peut être relié à des moyens d'aspiration, non représentés du type pompe à vide. Dans des utilisations du filtre sous pression, la pompe à vide peut être supprimée, le collecteur étant alors directement relié à la pression atmosphérique.

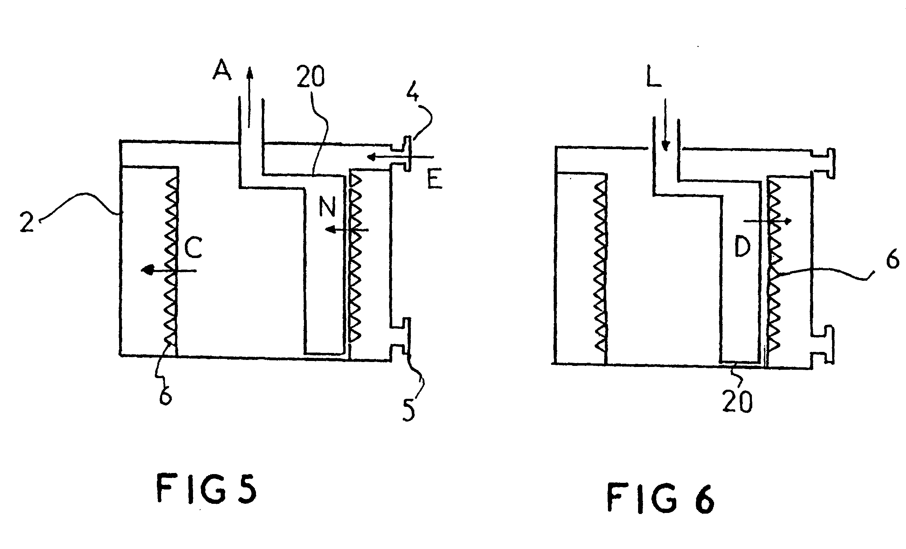

Le fonctionnement du dispositif est illustré aux figures 5 et 6.

Lorsque la suspension est introduite (flèche E) sous pression à l'intérieur de la cartouche (6), celle-ci a naturellement tendance à traverser (flèche C) la cartouche filtrante (6). Dans le cas où la suspension à filtrer est par exemple une suspension papetière, celle-ci contient des fibres qui peuvent colmater les ouvertures des pores de la cartouche (6). Ainsi, lors de la rotation de la caisse aspirante (20), le racle (25) associé à l'ouverture (21) de ladite caisse (20) décroche ces impuretés colmatantes. Simultanément, la caisse caractéristique (20) aspire à travers la cartouche (6), une certaine quantité de suspension déjà filtrée qui retraverse (flèche N) la cartouche (6) et dans son passage entraîne les impuretés décrochées. Typiquement, la différence de pression entre l'intérieur (37) et l'extérieur (38) de la cartouche est généralement comprise entre 0,2 et 0,5 bars tandis que la différence de pression entre l'extérieur (38) de la cartouche (6) et la caisse aspirante (20) est de l'ordre de 2 bars. Comme déjà dit, pour éviter que trop de suspension non filtrée soit aspirée, on règle la distance (e) entre la plaque (35) et la périphérie interne (12) de la cartouche (6).

Par la suite, le liquide aspiré est acheminé (flèche A) vers tous moyens (non représentés) permettant la récupération du produit filtré et son recyclage et l'élimination ou la récupération des impuretés. Il peut s'agir notamment dans l'application à la filtration de suspension papetière, d'un tamis vibrant.

Les moyens permettant le décolmatage peuvent également être utilisés pour nettoyer et laver la cartouche filtrante (6). Ainsi, lorsque le dispositif de filtration est vidé, il peut s'avérer avantageux d'injecter (flèche L) dans la caisse aspirante de l'eau qui, lorsqu'elle arrive dans l'ouverture de la caisse aspirante traverse (flèche D) la cartouche (6) et la nettoie. Il faut noter que dans ce cas, la circulation du fluide de lavage dans les moyens caractéristiques se fait dans le sens opposé à l'aspiration des impuretés.

On a vu que le décolmatage du filtre nécessite la consommation d'une certaine quantité de suspension déjà filtrée. Pour limiter cette consommation, il a été mis au point un dispositif complémentaire associé à la caisse aspirante (20).

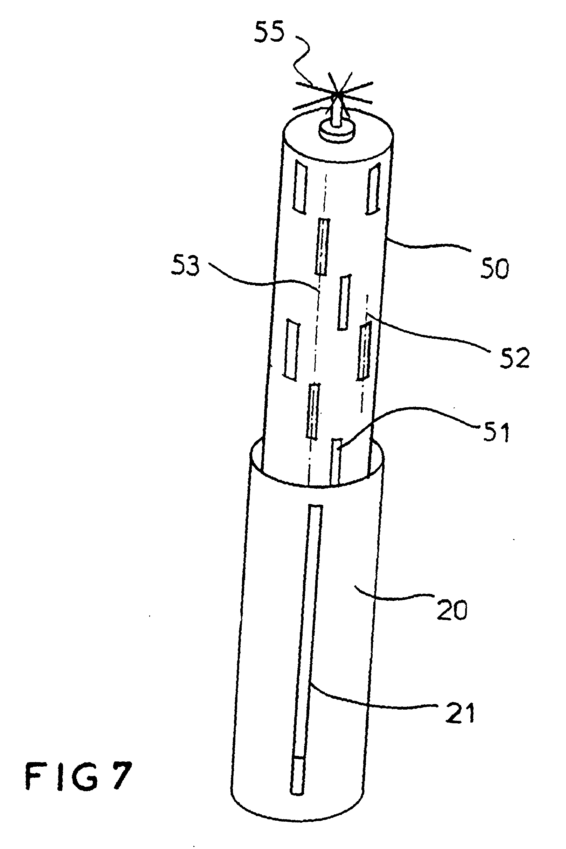

Ainsi (voir figure 7), la caisse aspirante comporte un cylindre supplémentaire (50) formant barillet, de diamètre extérieur très légèrement inférieur au diamètre intérieur de la caisse (20).

Ce barillet, (50) présente une pluralité d'ouvertures oblongues (51). Les grandes dimensions (52) de ses lumières (51) sont situées sur une génératrice (53) de ce cylindre (50). Ces lumières (51) sont réparties sur la circonférence et la longueur de ce cylindre (50), et décalées angulairement. De la sorte, lorsque ce barillet (50) est en place dans la caisse aspirante (20), seule une portion de l'ouverture (21) de ladite caisse est active. Ainsi, l'aspiration et le décolmatage n'ont lieu que dans la zone correspondant aux ouvertures du barillet en regard de celle (21) de la caisse, ce qui d'une part, réduit le volume consommé de suspension déjà filtrée et d'autre part, augmente la puissance d'aspiration et ainsi d'efficacité du décolmatage.

Avantageusement, ce cylindre présente dans sa partie haute un dispositif (55) de changement séquentiel par came. Ainsi, lors de la révolution de la caisse (20) sur la circonférence de la cartouche (6) ces moyens de came (55) rencontrent des moyens complémentaires (non représentés) disposés sur la cartouche (20) qui provoquent la rotation du barillet d'un angle prédéterminé, et ainsi le décalage vertical des zones d'aspiration active.

Il ressort de ce qui précède que le dispositif conforme à l'invention présente une grande simplicité mécanique. Il permet un décolmatage, par contre courant en continu, de la cartouche filtrante et une élimination toujours en continu des impuretés colmatantes. Il s'ensuit que d'une part, le filtre est propre en permanence et les performances s'en trouvent augmentées, et que d'autre part les interruptions nécessaires au nettoyage de la cartouche filtrante sont nettement espacées.

### Possibilités d'application industrielle

Le dispositif conforme à l'invention permet à la filtration de divers types de solutions. On peut citer notamment les suspensions destinées à l'industrie papetière, telles que bains de couchage ou suspensions de pigments ; l'industrie des peintures, encres et vernis, ainsi que la chimie la parachimie, industrie similaire.

Ce dispositif de filtration peut également servir à la récupération de contaminants lors d'opérations de traitement des eaux.

## Revendications

1. Dispositif de filtration (1) d'une suspension, du type comportant :
- une enceinte (2) de forme générale cylindrique, comportant deux ouvertures respectivement d'entrée (4) et de sortie (5), pour la suspension à filtrer ;
- une cartouche filtrante (6) cylindrique, disposée à l'intérieur de l'enceinte (2) et présentant une porosité calibrée entre sa première (12) et sa deuxième (14) faces, ordonnées selon le sens de circulation de la suspension à filtrer ;
la suspension à filtrer circulant de l'ouverture d'entrée (4) vers la cartouche (6), puis traversant la paroi (12) de la cartouche (6) de sa première (12) vers sa deuxième face (14), puis étant évacuée par l'ouverture de sortie (5),
- au moins une caisse aspirante (20) tangente à la cartouche (6), l'ouverture (21) de la caisse aspirante (20) se trouvant en regard d'une génératrice de la première face (12) de la cartouche (6), ladite caisse aspirante (20) étant entraînée en rotation (flèche R) par rapport à l'axe longitudinal (XX') de la cartouche (6) ;
**caractérisé en ce que** la caisse aspirante (20) comporte sur le bord (26) de son ouverture (21) situé en arrière par rapport au sens de révolution de la caisse aspirante, un racle (25) de décolmatage venant au contact de la première face (12) de la cartouche (6), en amont de l'ouverture de la caisse aspirante.

2. Dispositif de filtration selon la revendication 1, **caractérisé en ce que** le racle (25) est une lame orientée dans le sens de rotation de la caisse aspirante.

3. Dispositif de filtration selon la revendication 2, **caractérisé en ce que** la caisse aspirante (20) comporte sur le bord (28) opposé au racle (25) un déflecteur (35) légèrement écarté de la première face (12) de la cartouche (6).

4. Dispositif de filtration selon la revendication 3, **caractérisé en ce que** le déflecteur (35) présente au voisinage de l'ouverture (21) de la caisse aspirante (20), une portion chanfreinée (36) parallèlement à la lame (25).

5. Dispositif selon l'une des revendications 1 à 4, **caractérisé en ce qu'**il comporte un moyen (30) destiné à plaquer le racle (25) de la caisse aspirante (20) contre la première face (12) de la cartouche (6).

6. Dispositif selon l'une des revendications 1 à 5, **caractérisé en ce que** la caisse aspirante (20) est reliée à des moyens d'aspiration.

7. Dispositif selon l'une des revendications 1 à 6, **caractérisé en ce que** la caisse aspirante (20) comporte un cylindre rotatif (50) intérieurement tangent formant barillet, présentant des lumières allongées (51) et réparties selon des génératrices (53) différentes.

8. Dispositif selon la revendication 7, **caractérisé en ce qu'**il comporte des moyens de came (55) assurant la rotation du barillet (50) à l'intérieur de la caisse aspirante (20) au fur et à mesure de la révolution de la caisse aspirante (20) dans la cartouche (6).

9. Dispositif selon l'une des revendications 1 à 8, **caractérisé en ce qu'**il comporte une pluralité de caisses aspirantes (20) angulairement décalées les unes par rapport aux autres autour de l'axe XX' de la cartouche (20), et dont les ouvertures (21) se situent chacune à des niveaux différents de la hauteur de la cartouche (20).

## Claims

1. Device (1) for the filtration of a suspension, of the type which includes:
- a chamber (2) of cylindrical general shape, having two ports, respectively the inlet port (4) and the outlet port (5), for the suspension to be filtered;
- a cylindrical filter cartridge (6), placed inside the chamber (2) and having a calibrated porosity between its first face (12) and its second face (14), these faces being ordered in the direction of flow of the suspension to be filtered;
the suspension to be filtered flowing from the inlet port (4) to the cartridge (6), then passing through the wall (12) of the cartridge (6) from its first face (12) to its second face (14) and then being discharged via the outlet port (5),
- at least one suction box (20) tangential to the cartridge (6), the opening (21) in the suction box (20) lying opposite a generatrix of the first face (12) of the cartridge (6), the said suction box (20) being rotationally driven (arrow R) with respect to the longitudinal axis (XX') of the cartridge (6);
**characterized in that**, on an end face (26) of its opening (21), located backward with respect to the direction of rotation of the suction box, the suction box (20) includes a declogging scraper (25) which comes into contact with the first face (12) of the cartridge (6), upstream of the opening (21) of the suction box (20).

2. Filtration device according to Claim 1, **characterized in that** the scraper (25) is a blade oriented in the direction of rotation of the suction box.

3. Filtration device according to Claim 2, **characterized in that**, on the end face (28) opposite the scraper (25), the suction box (20) includes a deflector (35) placed at a slight distance from the first face (12) of the cartridge (6).

4. Filtration device according to Claim 3, **characterized in that**, in the vicinity of the opening (21) in the suction box (20), the deflector (35) has a portion (36) chamfered parallel to the blade (25).

5. Device according to one of Claims 1 to 4, **characterized in that** it includes a means (30) intended to press the scraper (25) of the suction box (20) against the first face (12) of the cartridge (6).

6. Device according to one of Claims 1 to 5, **characterized in that** the suction box (20) is connected to suction means.

7. Device according to one of Claims 1 to 6, **characterized in that** the suction box (20) includes an internally tangential rotary cylinder (50) forming a rotary chamber, having elongate slots (51) distributed along different generatrices (53).

8. Device according to Claim 7, **characterized in that** it includes cam means (55) which rotate the rotary chamber (50) inside the suction box (20) progressively as the suction box (20) revolves inside the cartridge (6).

9. Device according to one of Claims 1 to 8, **characterized in that** it includes a plurality of suction boxes (20) which are angularly offset with respect to each other about the axis (XX') of the cartridge (20) and the openings (21) in which each lie at different levels along the height of the cartridge (20).

## Patentansprüche

1. Einrichtung zur Filtration (1) einer Suspension, umfassend:
- eine(n) Kammer bzw. Behälter (2) von allgemein zylindrischer Form, die (der) zwei Öffnungen für die zu filtrierende Suspension, eine Eingangsöffnung (4) bzw. einer Ausgangsöffnung (5) aufweist;
- einen im Inneren der Kammer (2) angebrachten zylindrischen Filtereinsatz (6), der eine kalibrierte bzw. definierte Porosität zwischen seiner ersten (12) und seiner zweiten Fläche (14) aufweist, welche Flächen gemäß der Flussrichtung der zu filtrierenden Suspension angeordnet sind, wobei die zu filtrierende Suspension von der Eingangsöffnung (4) in Richtung des Einsatzes (6) strömt, dann die Wand des Einsatzes (6) von seiner ersten Fläche (12) in Richtung seiner zweiten Fläche (14) durchsetzt und sodann durch die Ausgangsöffnung (5) abgezogen wird,
- zumindest einen Saugkasten (20), der den Einsatz (6) tangiert bzw. an diesem anliegt, wobei sich die Öffnung (21) des Saugkastens (20) gegenüber einer Erzeugenden der ersten Fläche (12) des Einsatzes (6) befindet, wobei der Saugkasten (20) bezüglich der Längsachse (XX') des Einsatzes (6) rotierbar ist (Pfeil R);
**dadurch gekennzeichnet, dass** der Saugkasten (20) am Rand (26) seiner Öffnung (21), die bezüglich der Drehrichtung des Saugkastens nacheilt bzw. hinten gelegen ist, einen Abhebe-Schaber (25) umfasst bzw. trägt, der in Kontakt mit der ersten Fläche (12) des Einsatzes (6) stromaufwärts bzw. vorauseilend der Öffnung des Saugkastens kommt bzw. steht.

2. Einrichtung zur Filtration gemäß Anspruch 1, **dadurch gekennzeichnet, dass** der Schaber (25) ein(e) in Rotationsrichtung des Saugkastens weisende bzw. ausgerichtete Klinge bzw. Blatt ist.

3. Einrichtung zur Filtration gemäß Anspruch 2, **dadurch gekennzeichnet, dass** der Saugkasten (20) an dem dem Schaber (25) gegenüberliegenden Rand (28) einen Deflektor bzw. Ablenker (35) aufweist, der von der ersten Fläche (12) des Einsatzes (6) leicht abgesetzt bzw. um einen geringen Betrag abgehoben gelegen ist.

4. Einrichtung zur Filtration gemäß Anspruch 3, **dadurch gekennzeichnet, dass** der Deflektor (35) in der Nähe der Öffnung (21) des Saugkastens (20) einen abgefasten Abschnitt (36) aufweist, der parallel zur Schaberklinge (25) verläuft.

5. Einrichtung gemäß einem der Ansprüche 1 bis 4, **dadurch gekennzeichnet, dass** sie ein Mittel (30) umfasst, das dazu dient, den Schaber (25) des Saugkastens (20) gegen die erste Fläche (12) des Einsatzes (6) zu drücken bzw. anzulegen.

6. Einrichtung gemäß einem der Ansprüche 1 bis 5, **dadurch gekennzeichnet, dass** der Saugkasten (20) mit Mitteln zur Absaugung verbunden ist.

7. Einrichtung gemäß einem der Ansprüche 1 bis 6, **dadurch gekennzeichnet, dass** der Saugkasten (20) einen innen tangierenden, rotierbaren Zylinder (50) umfasst, der eine Rotationskammer ausbildet, und längliche Ausnehmungen bzw. Schlitze (51) aufweist, die entlang verschiedener Erzeugender (53) verteilt sind.

8. Einrichtung gemäß Anspruch 7, **dadurch gekennzeichnet, dass** sie Nocken (55) aufweist, die den Drehzylinder (50) im Inneren des Saugkastens (20) rotieren, in dem Maß, in dem der Saugkasten (20) im Einsatz (6) rotiert.

9. Einrichtung gemäß einem der Ansprüche 1 bis 8, **dadurch gekennzeichnet, dass** sie eine Mehrzahl von Saugkasten umfasst, die in Bezug zueinander um die Achse (XX') des Einsatzes (20) winkelmäßig versetzt angeordnet sind, wobei sich jede der Öffnungen (21) auf einem unterschiedlichen Höhenniveau der Kartusche (20) befindet.
